# FASCICULE DE BREVET EUROPEEN

(11) **EP 3 377 742 B1**
(45) Date de publication et mention de la délivrance du brevet: **11.09.2019**
(21) Numéro de dépôt: 16812994.8
(22) Date de dépôt: 17.11.2016
(51) Int. Cl.: F02D 15/02, F15B 15/14, F16C 7/04, F16C 7/06, F02B 75/04

(54) **BIELLE POUR MOTEUR A RAPPORT VOLUMETRIQUE VARIABLE**
STANGE FÜR EINEN MOTOR MIT VARIABLEM VERDICHTUNGSVERHÄLTNIS
ROD FOR A VARIABLE COMPRESSION RATIO ENGINE

(30) Priorité: 17.11.2015 FR 1561052
(43) Date de publication de la demande: 26.09.2018
(73) Titulaire: MCE 5 Development, 69003 Lyon (FR)
(72) Inventeur: DURY, Philippe, 01800 St Jean-De-Niost (FR); MIEHE, Yves, 69003 Lyon (FR)
(74) Mandataire: IP Trust
(86) Numéro de dépôt international: PCT/FR2016/052984
(87) Numéro de publication internationale: WO 2017/085409

(56) Documents cités:
- WO-A1-02/10568
- WO-A1-2013/092364
- GB-A- 2 161 580

## Description

### DOMAINE DE L'INVENTION

L'invention concerne une bielle d'un moteur à rapport volumétrique variable.

### ARRIERE PLAN TECHNOLOGIQUE DE L'INVENTION

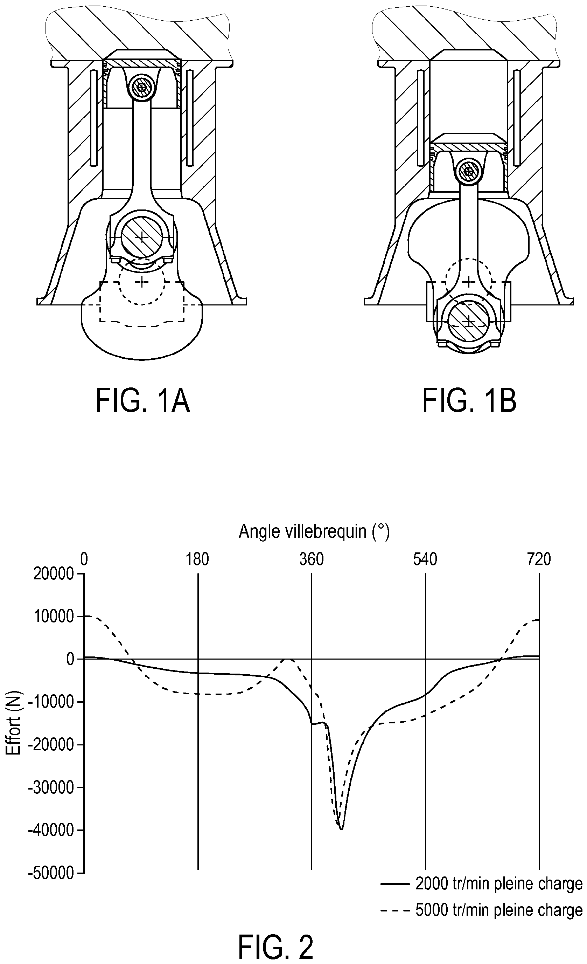

En avant-propos, on rappelle qu'une bielle d'un moteur à combustion interne est associée du côté de son pied au palier d'un piston de combustion et du côté de sa tête au palier d'un vilebrequin. Ces deux paliers sont généralement d'axes parallèles. Comme cela est respectivement représenté sur les figures 1A et 1B, la bielle a pour fonction de transmettre le mouvement de translation du piston d'un « point mort haut » à un « point mort bas » au mouvement de rotation du vilebrequin. La bielle permet également de maintenir la position angulaire du piston selon l'axe de translation de celui-ci.

On connaît de multiples solutions dans l'état de la technique permettant d'ajuster le rapport volumétrique et/ou la cylindrée d'un moteur à combustion interne.

On rappelle que le rapport volumétrique d'un moteur à combustion interne, souvent appelé taux de compression, correspond au rapport entre le volume de la chambre de combustion lorsque le piston est à son point mort bas ; et le volume de la chambre de combustion lorsque le piston est à son point mort haut. Toute chose étant égale par ailleurs, le choix de la longueur de la bielle détermine le rapport volumétrique du moteur.

Il est généralement admis que l'adaptation du rapport volumétrique d'un moteur à sa charge permet d'améliorer grandement le rendement énergétique du moteur. Par exemple il est parfois recherché de faire varier le rapport volumétrique entre environ une valeur de 12 en l'absence de charge à une valeur de l'ordre de 8 à pleine charge.

On rappelle qu'un cycle moteur complet d'un moteur à quatre temps est constitué d'un cycle d'admission des gaz frais, suivit d'un cycle de compression, d'un cycle de combustion-détente, et enfin d'un cycle d'échappement. Ces cycles sont d'étendues sensiblement égales, répartis sur 720° de rotation du vilebrequin. On définit alors la charge du moteur comme étant la pression constante fictive s'exerçant sur la calotte du piston lors de la partie combustion-détente d'un cycle (la pression s'exerçant sur la calotte du piston lors de la partie complémentaire du cycle étant considérée comme nulle) conduisant à obtenir une puissance équivalente à celle développée par le moteur au cours d'un cycle complet. Cette pression est au maximum de l'ordre de 10 bars pour un moteur atmosphérique courant, et peut monter communément jusqu'à des valeurs de 20 à 30 bars pour un moteur suralimenté.

La cylindrée correspond quant à elle au volume engendré par le coulissement du piston dans le cylindre du moteur entre un point mort haut et un point mort bas. Une cylindrée variable est obtenue en faisant varier la course du piston dans le cylindre. La cylindrée n'est pas affectée par le choix de la longueur de la bielle. La variation de cylindrée doit être de grande amplitude pour avoir un effet notable sur le rendement énergétique, ce qui est technologiquement difficile à mettre en oeuvre.

Ainsi, le document US4111164 vise à faire varier la cylindrée d'un moteur selon la charge qui s'y applique. Ce document divulgue une bielle composée d'un ressort associé à une chambre hydraulique de sorte à coupler rigidement un piston au vilebrequin du moteur lorsque celui-ci n'est pas soumis à une charge ; et à coupler élastiquement le piston au vilebrequin lorsque le moteur est soumis à une charge importante. Pour cette seconde situation de charge importante, la bielle agit comme un absorbeur de choc, se compressant et se dilatant suivant la valeur instantanée des efforts qui se développent au cours d'un cycle moteur. Ainsi, ce document divulgue une cylindrée constante avec la charge lors du cycle d'admission, tandis que la cylindrée est augmentée lors du cycle de combustion lorsque la charge augmente. Toutefois, les efforts de combustion en partie absorbés dans la chambre hydraulique de la bielle ne sont pas restitués, ce qui rend la solution particulièrement peu efficace.

Cette solution ne permet donc pas d'ajuster le rapport volumétrique suivant la charge s'appliquant au cours d'un ou d'une succession de cycles moteur. Le comportement de cette bielle est particulièrement sensible au régime du moteur. La solution proposée dans ce document conduit par ailleurs à solliciter intensément les éléments mécaniques composant la bielle (ressort, chambre hydraulique) au cours du fonctionnement du moteur, ce qui accélère leurs usures et réduit la fiabilité du système.

Par ailleurs, la chambre hydraulique de la solution présentée dans ce document est particulièrement sensible au changement de température du fluide hydraulique, ce qui, combiné à la sensibilité au régime moteur, rend le comportement de la bielle particulièrement imprévisible.

Le document RO111863 décrit un moteur à combustion interne constitué d'un bloc supérieur mobile et d'un bloc inférieur fixe vis-à-vis du châssis d'un véhicule. Le bloc supérieur est libre de pivoter selon un axe latéral liant ce bloc supérieur au bloc inférieur. Quand la charge du moteur croit, la pression effective moyenne dans le cylindre augmente et entraîne le basculement du bloc supérieur autour de l'axe latéral. Un volume de cylindre est en conséquence ajouté au volume de la chambre de combustion provoquant ainsi une diminution du rapport volumétrique de compression.

La solution proposée dans ce document requiert la conception et la fabrication d'un bloc-moteur articulé qui ne correspond pas à une architecture standard de moteur à combustion, constitué d'un bloc moteur fixe, ce qui requiert une reconception complète de la plupart des éléments d'interface entre le moteur et le châssis du véhicule. Ainsi, les éléments se raccordant à la partie supérieure du moteur (ligne d'admission d'air, d'essence, ligne d'échappement, distribution,...) doivent être adaptés pour tolérer la mobilité de la partie supérieure du moteur.

D'autres documents, tel que WO2013092364, décrivent des bielles à longueur contrôlée, permettant de fixer le rapport volumétrique d'un moteur à combustion interne (et sans affecter la cylindrée). Ces solutions requièrent la présence d'un système de pilotage actif de la longueur de la bielle via un système de commande externe (piston hydraulique, moteur électrique) qui est généralement complexe, source de pertes énergétiques et peu fiable. De plus, le contrôle du rapport volumétrique ne se fait pas de manière continue et la plage de rapports volumétriques accessible est souvent très limitée. C'est le cas notamment de la solution proposée dans le document précité qui ne prévoit que deux longueurs de bielle.

### OBJET DE L'INVENTION

L'invention vise à remédier au moins à certains inconvénients de l'art antérieur présentés ci-dessus. En particulier, l'invention vise à rendre indépendant de la température de fonctionnement du moteur, le comportement d'une bielle pour un moteur à rapport volumétrique variable.

### BREVE DESCRIPTION DE L'INVENTION

En vue de la réalisation de ce but, l'objet de l'invention propose une bielle de longueur variable pour ajuster le rapport volumétrique d'un moteur, la bielle présentant une longueur nominale et étant susceptible d'être soumise à des efforts de traction et de compression suivant son axe longitudinal, la bielle comprenant :
- un cylindre solidaire d'une première extrémité de la bielle ;
- un piston mobile dans le cylindre, solidaire de la seconde extrémité de la bielle, et définissant dans le cylindre une première chambre hydraulique dite « haute pression » apte à transmettre les efforts de compression et une seconde chambre hydraulique dite « basse pression » apte à transmettre les efforts de traction;

- au moins un conduit calibré permettant l'écoulement d'un fluide hydraulique entre la chambre basse pression et la chambre haute pression ;
- des moyens mécaniques de rappel tendant à ramener la bielle à sa longueur nominale ;

La bielle est remarquable en ce que la chambre hydraulique basse pression et la chambre hydraulique haute pression présentent des sections équivalentes. On s'assure ainsi que le comportement de la bielle aux efforts reste sensiblement indépendant de la température du fluide hydraulique.

Selon d'autres caractéristiques avantageuses et non limitatives de l'invention, prises seules ou en combinaison :
- le cylindre présente une section circulaire ou ovale.
- le cylindre et/ou le piston est pourvu d'un moyen d'indexation en rotation du piston par rapport au cylindre.
- les moyens mécaniques de rappel comprennent un ressort.
- le ressort est placé dans la chambre hydraulique haute pression.
- le ressort est préchargé.
- la bielle comporte de plus des moyens de remplissage du cylindre d'un fluide hydraulique, par exemple agencés pour introduire le fluide hydraulique dans la chambre basse pression.
- les moyens de remplissage comprennent un clapet anti-retour.
- la bielle comporte de plus des moyens de décharge d'un excès de fluide hydraulique dans le cylindre, afin de limiter la pression qui s'y développe.
- les moyens de décharge comprennent un clapet anti-retour.
- le conduit calibré est formé dans le piston ou dans le corps du cylindre.
- le conduit calibré est formé par le jeu existant entre le piston et le cylindre.
- La bielle comprend :
   ∘ Au moins un conduit calibré dit « de traction » autorisant uniquement un écoulement de la chambre hydraulique basse pression vers la chambre hydraulique haute pression;
   ∘ Au moins un conduit calibré dit « de compression » autorisant uniquement un écoulement de la chambre hydraulique haute pression vers la chambre hydraulique basse pression.
- le conduit calibré de compression autorise un écoulement uniquement lorsque la pression dans la chambre hydraulique haute pression excède la pression dans la chambre hydraulique basse pression d'une valeur déterminée.
- la bielle présente au moins deux conduits calibrés de compression.
- le conduit calibré est configuré pour favoriser un écoulement turbulent du fluide hydraulique.
- La bielle comporte au moins un clapet formé d'une partie mobile dont la direction de mobilité est parallèle aux axes de pied et de tête de la bielle.
- La bielle comporte au moins un clapet formé d'une partie mobile dont la direction de mobilité est située dans un plan comprenant l'axe principal et transversal de la bielle, la masse de la partie mobile du clapet étant choisie à une grandeur déterminée.
- les caractéristiques des moyens mécaniques de rappel et du conduit calibré sont choisies pour que la bielle forme un système oscillant fortement amorti.

Selon un autre aspect, l'invention concerne également un moteur à rapport volumétrique variable comprenant la bielle de longueur variable. Selon d'autres caractéristiques avantageuses et non limitatives prises seules ou en combinaison :
- Le moteur comprend un dispositif de détermination du rapport volumétrique.
- Le dispositif de détermination du rapport volumétrique comprend une cible disposée sur la bielle de longueur variable et un détecteur placé en vis-à-vis dans le moteur.

### BREVE DESCRIPTION DES DESSINS

L'invention sera mieux comprise à la lumière de la description qui suit des modes de réalisation particuliers et non limitatifs de l'invention en référence aux figures ci-jointes parmi lesquelles :
- les figures 1A et 1B représentent les positions de point mort haut et de point mort bas d'un piston d'un moteur à combustion conventionnel ;
- la figure 2 représente les efforts s'appliquant sur une bielle au cours d'un cycle moteur pour une charge maximale et deux régimes moteur différents ;
- La figure 3 représente l'amplitude maximale des efforts de compression au cours d'un cycle moteur suivant sa charge ;
- la figure 4 représente l'évolution des efforts d'inertie au cours d'un cycle moteur, pour différent régime de ce moteur ;
- la figure 5 représente le schéma de principe d'une bielle conforme à l'invention ;
- la figure 6 représente les moyens d'étanchéité du piston de la bielle, selon un mode de mise en oeuvre particulier de l'invention ;
- la figure 7a représente graphiquement la relation liant la longueur d'une bielle à la charge d'un moteur, bielle pour laquelle la condition d'équivalence de section n'est pas respectée, pour une élévation de température du fluide hydraulique.
- les figures 7b à 7d représentent trois configurations de bielle, pour lesquelles la condition d'équivalence de section est respectée ;
- La figure 8a représente une loi de comportement charge moteur - rapport volumétrique cible d'un moteur ;
- La figure 8b représente la longueur cible de bielle suivant la charge moteur, pour reproduire la loi de comportement de la figure 8a ;
- La figure 8c représente, pour trois configurations de bielles différentes, des lois d'amortissement correspondant à la vitesse maximale d'élongation de la bielle selon l'amplitude d'un effort constant qui lui est appliqué ;
- la figure 9 représente un premier exemple de bielle conforme à l'invention ;
- la figure 9a représente en détail le conduit calibré de l'exemple de la figure 9 ;
- la figure 10 représente le comportement de la bielle du premier exemple lorsque celle-ci est mise en opération dans un moteur ;
- La figure 11 représente un second exemple de bielle conforme à l'invention ;
- les figures 11a et 11b représentent en détail les conduits calibrés de l'exemple de la figure 11 ;
- La figure 12 représente le comportement de la bielle du second exemple lorsque celle-ci est mise en opération dans un moteur ;

### DESCRIPTION DETAILLEE DE L'INVENTION

Une bielle est soumise à des efforts de traction et de compression au cours des cycles de fonctionnement du moteur. Ces efforts ont deux origines : les efforts dus à la combustion du mélange dans le cylindre de combustion et les efforts d'inertie dus au régime moteur. La figure 2 représente à titre d'exemple les efforts s'appliquant sur une bielle au cours d'un cycle moteur pour une charge maximale et deux régimes moteur différents.

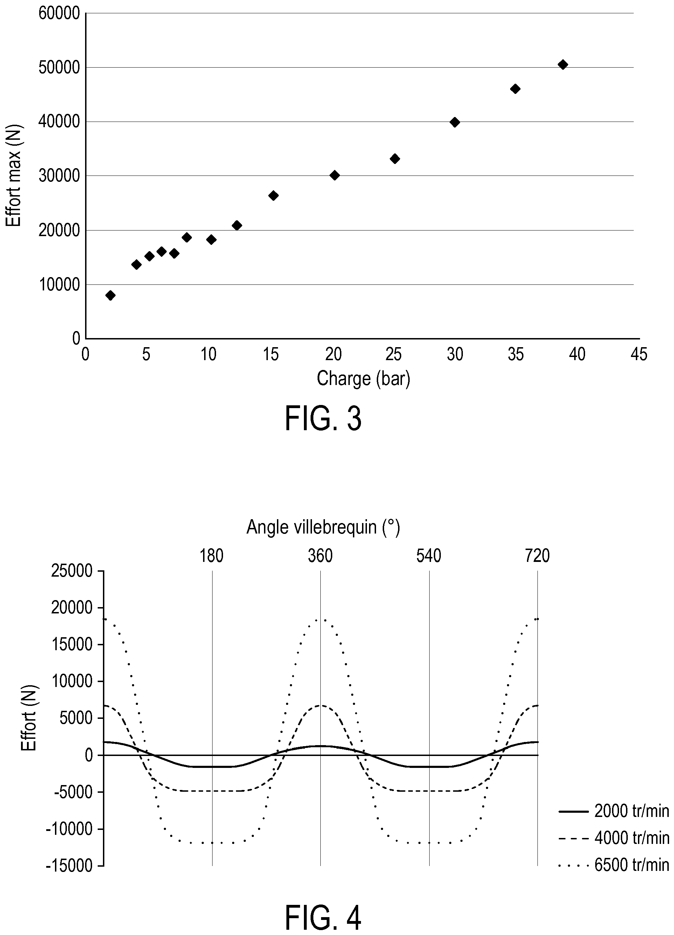

Les efforts de combustion se traduisent exclusivement en efforts de compression sur la bielle. L'amplitude maximale de ces efforts est sensiblement proportionnelle à la charge du moteur comme cela est représenté sur la figure 3, à titre d'exemple.

Les efforts d'inertie se traduisent sur la bielle en efforts successifs de traction et de compression au cours d'un cycle moteur. L'amplitude maximale des efforts d'inertie est essentiellement proportionnelle au carré du régime moteur (c'est-à-dire sa vitesse de rotation). Ceci est illustré à titre d'exemple sur la figure 4.

Au cours d'un cycle moteur ou d'une pluralité de cycles moteur, et si l'on néglige les frottements, le travail développé par les efforts d'inertie s'appliquant sur la bielle est nul, les efforts instantanés d'inertie de compression et les efforts instantanés d'inertie de traction, bien que d'amplitudes maximales et d'allures différentes se compensant les uns les autres en moyenne sur l'ensemble du cycle.

En conséquence, sur un cycle ou une pluralité de cycles moteurs le travail des efforts combinés s'appliquant sur la bielle correspond sensiblement au travail des efforts de combustion, qui sont représentatifs de la charge moteur comme on l'a précisé précédemment en relation avec la description de la figure 3.

L'invention s'appuie sur ces observations pour proposer une bielle de longueur variable suivant la charge du moteur, c'est à dire suivant les efforts moyens de combustion. Cette variation de longueur de bielle permet d'ajuster de manière autonome (c'est à dire sans nécessiter la mise en oeuvre d'un système de pilotage actif de la longueur de bielle) le rapport volumétrique du moteur à sa charge, sans en modifier sensiblement la cylindrée.

Par « efforts moyens » on signifie la moyenne des efforts qui s'appliquent pendant un cycle ou une pluralité de cycles, notamment de cycles-moteur.

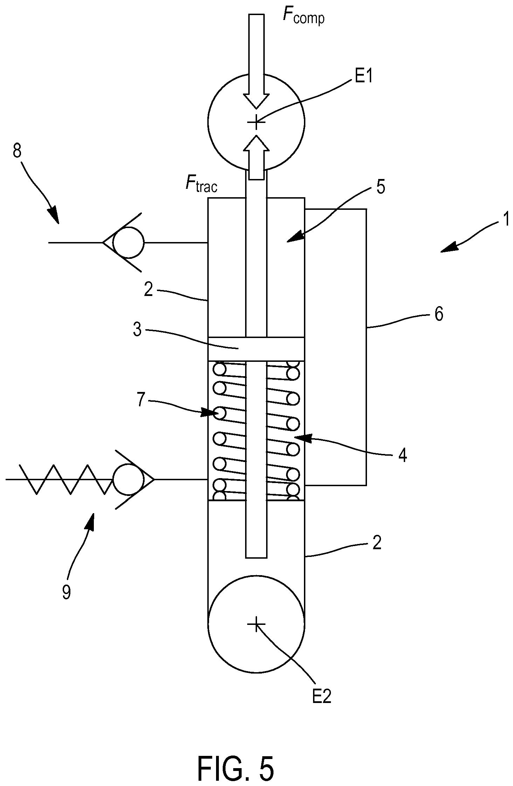

Une bielle 1 conforme à l'invention et comme cela est représenté schématiquement sur la figure 5, comprend :
- un cylindre 2 solidaire d'une première extrémité E1 de la bielle ;
- Un piston mobile 3 dans le cylindre 2 et solidaire de la seconde extrémité E2 de la bielle.

Chaque extrémité de la bielle 1 peut porter un palier destiné l'un à être connecté au piston de combustion l'autre au vilebrequin. Par longueur de la bielle, on désigne la distance d'entraxe séparant les deux paliers. Le déplacement du piston 3 dans le cylindre 2 permet d'ajuster la longueur de la bielle 1 entre une première butée (longueur minimale de la bielle) et une seconde butée (longueur maximale ou nominale de la bielle).

Le piston 3 définit dans le cylindre 2 une première chambre hydraulique 4 dite de « haute pression », apte à transmettre les efforts de compression Fcomp qui s'appliquent sur la bielle 1 suivant son axe longitudinal et une seconde chambre hydraulique 5 dite de « basse pression » apte à transmettre les efforts de traction Ftrac qui s'appliquent sur la bielle 1 suivant son axe longitudinal. Ces deux chambres « haute pression » 4 et « basse pression » 5 sont en communication fluidique, par l'intermédiaire d'au moins un conduit calibré 6.

Le déplacement du piston 3, conduisant à l'ajustement de la longueur de la bielle 1, est engendré par l'application des efforts de traction et de compression sur la bielle 1 et est permis (dans la limite prévue par les butées) par l'écoulement du fluide d'une chambre à l'autre à travers le conduit calibré 6. En l'absence d'écoulement, la bielle 1 se comporte comme un corps rigide, le mouvement du piston 3 dans le cylindre 2 étant limité à la compressibilité du fluide hydraulique mis sous pression par les efforts de traction et/ou de compression.

La dynamique de l'écoulement entre les deux chambres 4, 5 conditionne donc la vitesse d'ajustement de la longueur de la bielle 1 aux efforts instantanés qui s'appliquent.

Selon l'invention, cette dynamique est choisie (notamment par le dimensionnement du ou des conduits calibrés 6) pour ne pas réagir, ou réagir avec une amplitude contrôlée et limitée, aux efforts instantanés d'inertie ou de combustion.

De manière particulièrement avantageuse, le ou les conduits calibrés 6 est configuré pour favoriser un écoulement turbulent. En effet, dans des conditions d'écoulement turbulent, par opposition à un écoulement laminaire, la relation liant le débit à la pression est bien moins sensible à la température du fluide. On contribue de la sorte à établir un comportement sensiblement constant de la bielle malgré les variations de température du fluide hydraulique (qui peut s'étendre de -20°C à froid dans des conditions de température extrême à 150°C en fonctionnement dans un moteur).

Comme cela est bien connu en soi, un écoulement turbulent est favorisé en diminuant le rapport longueur du conduit sur son diamètre et en pénalisant l'entrée du fluide hydraulique dans le conduit de manière à créer une transition violente entre la chambre et ce conduit (par exemple, on ne forme pas de cônes d'entrée du type convergent entre les chambre 4, 5 et le conduit 6) .

Selon une première configuration, le cylindre 2 de bielle et/ou le piston 3 de bielle sont munis de moyens d'étanchéité évitant l'écoulement du fluide hydraulique d'une chambre 4, 5 à l'autre en dehors du (ou des) conduit calibré 6 prévu.

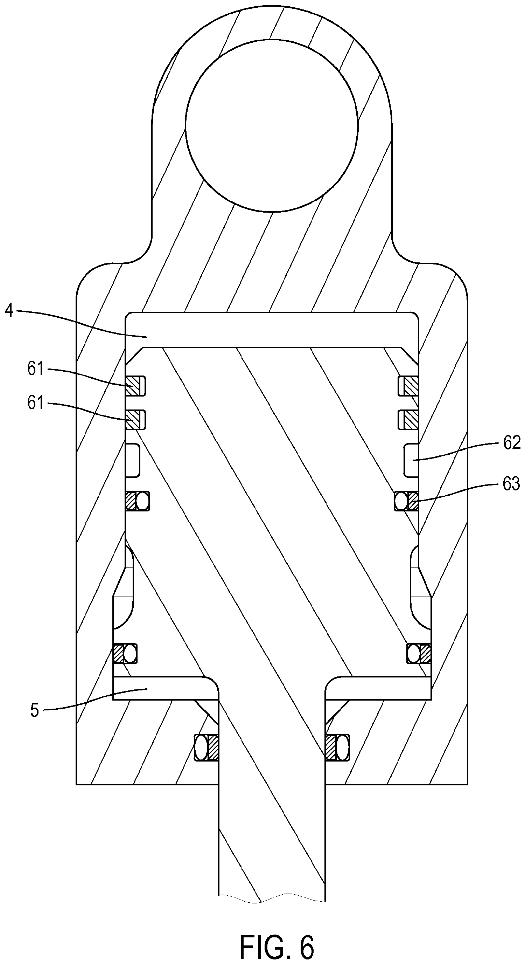

Dans un exemple de mise en oeuvre particulier, et représenté sur la figure 6, ces moyens d'étanchéité comprennent au niveau de la face de glissement du piston, et en succession de la chambre haute pression 4 vers la chambre basse pression 5 :
- un ou plusieurs segments métalliques 61 permettant de contenir le front de pression du fluide présent dans la chambre haute pression 4 ;
- un réservoir 62 intermédiaire de fluide hydraulique ;
- et un joint 63 (par exemple composite ou torique) assurant l'étanchéité de l'ensemble.

Dans cette première configuration, le conduit calibré 6 entre la chambre basse pression 5 et la chambre haute pression 4 est formé dans le piston 3 et/ou dans le cylindre 2. De manière avantageuse, et par simplicité de fabrication, le conduit calibré 6 ou l'un des conduits calibrés 6 entre la chambre basse pression 5 et la chambre haute pression 4 est formé dans le piston 3. Alternativement, ce conduit 6 ou l'un de ces conduits calibrés 6 peut être formé dans le corps du cylindre 2.

Selon une autre configuration, le cylindre de bielle 2 et/ou le piston de bielle 3 ne sont pas munis de moyens d'étanchéité. Dans ce cas, le jeu entre le piston 3 et le cylindre 2 est choisi pour permettre l'écoulement du fluide entre les deux chambres, et constitue en soi un conduit calibré 6 entre la chambre basse pression 5 et la chambre haute pression 4. Dans cette configuration, on peut également prévoir au moins un conduit calibré 6 additionnel formé dans le piston 3 et/ou dans le corps du cylindre 2.

De plus, une bielle 1 conforme à l'invention comprend des moyens mécaniques de rappels 7 configurés pour ramener la bielle à sa longueur nominale en l'absence d'efforts extérieurs.

La bielle 1 ainsi constituée forme un système oscillant.

Selon l'invention, le ou les conduits calibrés 6 et les moyens mécaniques de rappel 7 sont configurés et/ou choisis pour ajuster la longueur de la bielle 1 aux efforts moyens de traction et de compression qui s'appliquent sur la bielle 1. Cet ajustement peut consister en la diminution de la longueur de bielle avec la l'augmentation des efforts moyens de compression. En d'autres termes, les caractéristiques des moyens mécaniques de rappels (raideur, précharge, etc) et du ou des conduit (s) calibré(s) (nombre, diamètre, longueur, nature de l'écoulement, etc) sont choisie pour que la bielle forme ou présente le comportement d'un système oscillant fortement amorti. On rappelle qu'un système oscillant fortement amorti est un système oscillant présentant un facteur d'amortissement supérieur à 1.

On expose ci-dessous le fonctionnement d'une bielle 1 conforme à l'invention, lorsque celle-ci est en opération dans un moteur.

Au démarrage du moteur, la bielle 1 présente sa longueur nominale, les moyens de rappels 7 conduisant à placer l'ensemble piston 3/cylindre 2 de la bielle en position de butée mécanique. Le moteur présente donc au démarrage un rapport volumétrique défini par la longueur de bielle nominale.

Les efforts instantanés de traction et de compression qui s'appliquent sur la bielle 1 à faible charge et qui correspondent donc essentiellement à des efforts d'inertie, se développent avec une dynamique plus rapide que la dynamique de l'écoulement dans le conduit calibré 6 entre la chambre hydraulique haute pression 4 et la chambre hydraulique basse pression 5. Aussi, la longueur de bielle 1 n'est essentiellement pas affectée par ces efforts, même si des oscillations de faibles amplitudes peuvent apparaître.

Lorsque la charge du moteur augmente, les efforts de compression moyens deviennent suffisants pour permettre au fluide hydraulique d'être transféré de manière significative de la chambre haute pression 4 à la chambre hydraulique basse pression 5. Cet écoulement conduit au déplacement du piston 3 dans le cylindre 2 et à la contraction de la bielle 1. Le rapport volumétrique du moteur est alors ajusté, de manière entièrement autonome, selon la longueur effective de la bielle 1.

Avantageusement, les moyens mécaniques de rappel 7 comprennent un ressort, par exemple un ressort de compression, agencé pour exercer un effort tendant à écarter la première extrémité de la seconde extrémité de la bielle 1. Le ressort peut être placé dans la chambre hydraulique haute pression 4, ou agencé sur la bielle 1 à l'extérieure de cette chambre 4.

Le ressort peut présenter une raideur qui conduit à appliquer un effort de rappel croissant avec la contraction de la bielle 1. D'une manière générale, lorsque les efforts de rappel ne sont fournis que par le ressort et en dehors des effets de butées ou d'effets transitoires, lorsque les efforts moyens de combustion correspondant à la charge moteur s'équilibrent avec les efforts appliqués par les moyens de rappel 7, la longueur de la bielle 1 est essentiellement stabilisée autour d'une longueur d'équilibre, même si des oscillations de faibles amplitudes peuvent se manifester.

Inversement lorsque la charge moteur diminue, le fluide hydraulique tend à être transféré à travers le conduit calibré 6 de la chambre basse pression 5 vers la chambre haute pression 4, et la bielle 1 tend à revenir sur sa butée mécanique correspondant à une configuration de longueur nominale. Le rapport volumétrique du moteur est ajusté en conséquence.

La raideur du ressort est choisie pour accorder le débattement maximum de la bielle, entre ses deux butées, pour une gamme choisie de charges.

Le ressort peut être pré-chargé, c'est-à-dire que lorsque la bielle 1 présente sa longueur nominale, au repos, le ressort applique un effort de rappel seuil non nul. Ainsi tant que l'effort moyen de combustion (effort de compression) reste inférieur à cet effort de rappel seuil, la longueur de la bielle 1 reste fixe, à sa longueur nominale. Comme on le verra par la suite, une partie de l'effort de rappel seuil peut être apporté par la partie hydraulique de la bielle 1. Dans ce cas, la partie de l'effort de rappel seuil apportée par le ressort peut être réduit, et la dimension du ressort pour être réduite également.

Selon un mode de mise en oeuvre particulier de l'invention, le ressort est pré-chargé à un effort de rappel seuil non nul et sa raideur est choisie pour être faible, de sorte que, par exemple, la variation d'effort de rappel d'une butée à l'autre n'excède pas 70% de l'effort de pré-charge.. On applique de la sorte à la bielle 1 un effort de rappel essentiellement constant, indépendant de sa longueur. On constitue ainsi une bielle 1 pouvant prendre deux configurations stables, sur ses butées :
- dans une première configuration, la bielle 1 présente une première longueur égale à sa longueur nominale tant que l'effort moyen de combustion appliqué reste inférieur à l'effort de rappel seuil ;
- Dans une seconde configuration, la bielle 1 présente une longueur égale à sa longueur minimale lorsque l'effort moyen de combustion appliqué est supérieur à l'effort de rappel seuil.

Ce mode de mise en oeuvre est particulièrement adapté à la réalisation d'une bielle 1 simple et peu coûteuse pour la mise en oeuvre d'un moteur à rapport volumétrique variable autonome « bi-taux ». Le moteur présente un premier rapport volumétrique imposé par la longueur nominale de la bielle dans sa première configuration, pour une charge faible ; et un second rapport volumétrique imposé par la longueur minimale de la bielle dans sa seconde configuration, pour une charge excédent une charge seuil. La longueur de la bielle 1 est bien ajustée aux efforts moyens de traction et de compression qui s'y applique.

Le cylindre 2 et le piston 3 de la bielle peuvent présenter une section circulaire. Dans ce cas ils sont pourvus de moyens d'indexation 12 permettant d'éviter la rotation suivant un axe longitudinal du piston de combustion dans le cylindre de combustion afin de maintenir l'orientation des paliers du piston de combustion et du vilebrequin parallèles au cours de la translation du piston de combustion. Il peut s'agir d'une structure en cannelure entre le piston 3 et le cylindre 2 ou d'une goupille 12 insérée dans le piston 3 à travers une ouverture oblongue du cylindre 2, permettant le déplacement en translation du piston 3, mais bloquant tout mouvement de rotation. On évite ainsi de développer des frottements ou le blocage du moteur au niveau des liaisons avec le vilebrequin et/ou du piston et du cylindre de combustion.

Alternativement, le cylindre 2 et le piston 3 de la bielle présentent une section non circulaire, telle qu'une section ovale, qui prévient en soi le risque de rotation suivant l'axe longitudinal de ces deux corps.

D'une manière générale, le cylindre 2 et le piston 3 sont dimensionnés de manière à limiter l'encombrement de la bielle 1 et permettre son placement dans un moteur à combustion de conception traditionnelle. Toutefois, le dimensionnement minimum de la bielle 1 est limité par la pression du fluide hydraulique maximale qui peut se développer dans les chambres hydrauliques 4, 5. A ce titre, une section ovale du cylindre 2 et du piston 3 est parfois plus appropriée, permettant d'accommoder les contraintes d'encombrement et de pression. En tout état de cause, les surfaces soumises à la pression du fluide hydraulique du côté de la chambre basse pression 5 et du côté de la chambre haute pression 4 sont choisies suffisamment importantes pour que lorsque le piston est soumis à un effort maximum, la pression qui se développe dans l'une ou l'autre chambre ne soit pas excessive, vis-à-vis par exemple de la tenue des moyens d'étanchéité. On peut par exemple choisir de ne pas excéder une pression, dans la chambre haute pression 4, d'environ 400 bar à 1000 bar pour un moteur à combustion traditionnel.

L'étendue des surfaces soumises à la pression du fluide hydraulique peut être définie plus précisément comme l'aire des surfaces en contact avec ce fluide projetée sur un plan perpendiculaire à la direction du coulissement du piston 3 de la bielle dans le cylindre 2 de la bielle.

Le cylindre 2 et/ou le piston 3 de la bielle peuvent être munis au niveau de la chambre haute pression 4 ou de la chambre basse pression 5 de moyens de remplissage 8 d'un fluide hydraulique. Ces moyens de remplissage permettent de maintenir les chambres emplies de ce fluide, compensant de la sorte les éventuelles fuites. Il peut s'agir d'un conduit formé dans le corps de bielle et débouchant, en une première extrémité, dans le cylindre de la bielle et, en sa seconde extrémité, au niveau de la liaison entre la tête de bielle et le palier du vilebrequin. Comme cela est bien connu en soi, le fluide hydraulique peut être prélevé dans le moteur au niveau de cette liaison et s'écouler dans le conduit du corps de bielle pour alimenter le cylindre.

De préférence, la première extrémité du conduit débouche dans la chambre basse pression 5 du cylindre 2 ce qui permet de tirer profit de l'effet de pompage qui s'opère lors de l'application d'un effort de compression sur la bielle et favoriser ainsi l'écoulement de remplissage du fluide hydraulique dans le cylindre 2. Le conduit peut être muni d'un clapet anti-retour empêchant l'écoulement hors du cylindre par ce conduit, comme cela est représenté schématiquement sur la figure 5.

Afin de limiter la pression qui se développe dans le cylindre 2 de la bielle, celui-ci peut être muni de moyens de décharge 9. Ces moyens peuvent être constitués ou comprendre un simple conduit vers l'extérieur de la chambre haute pression 4 formant une fuite constante, ou un conduit muni d'un limiteur de pression par exemple sous la forme d'un clapet taré à une pression seuil égale à la pression maximale souhaitée dans cette chambre.

De manière particulièrement avantageuse, la chambre basse pression 5 et la chambre haute pression 4 présentent une section équivalente. Par « section équivalente », on signifie que le volume balayé par le déplacement du piston 3 dans l'une des chambres 4, 5 est identique au volume balayé dans l'autre chambre par le déplacement du piston 3.

La condition de « section équivalente » est remplie quand les surfaces soumises à la pression de chaque face du piston, projetée sur un plan perpendiculaire à la direction déplacement du piston, sont sensiblement égales.

Pour un point de fonctionnement moteur donné, et lorsque le piston 3 a atteint sa position d'équilibre, la différence de pression entre les deux chambres reste constante quelle que soit la température du fluide hydraulique. Dans la mesure où la condition de section équivalente est respectée, le bilan des efforts agissant sur la bielle est constant quelle que soit la température du fluide hydraulique.

La pression interne des chambres 4, 5 est particulièrement variable avec la dilatation du fluide hydraulique en fonction de la température (qui peut s'étendre de -20° à froid dans des conditions de température extrême à 150° en fonctionnement dans un moteur). A défaut d'une équivalence des sections, la variabilité de la pression interne engendrerait une variabilité des forces qui s'appliquent sur le piston 3. En conséquence, la bielle aurait un comportement (longueur en fonction de la charge moteur) variable avec la température, ce qui n'est généralement pas désiré.

En d'autres termes, et en l'absence de clapet anti-retour taré sur le conduit 6, la bielle 1 tend à équilibrer lors de son fonctionnement les pressions moyennes dans les chambres haute et basse pression 4, 5. Lorsque les sections ne sont pas équivalentes, l'effort moyen généré par la pression et s'exerçant sur le piston 3 n'est plus nul. Celui-ci est alors proportionnel à la différence de section entre les chambres 4, 5, et est proportionnel à la pression moyenne régnant dans les chambres 4,5. Or, le fluide hydraulique est soumis fortement à la dilatation thermique, il en résulte que la pression régnant dans les chambres 4, 5 peut varier lors de la montée en température du moteur. En conséquence, l'équilibre entre les efforts exercés par les moyens de rappel 7, les efforts de combustion, et les efforts hydrauliques exercés sur le piston 3 est alors perturbé par la température, ce qui n'est pas souhaitable. Les conditions de sections équivalentes présentent l'avantage de contribuer à préserver un comportement (la loi longueur-charge) sensiblement constant de la bielle malgré les variations de température.

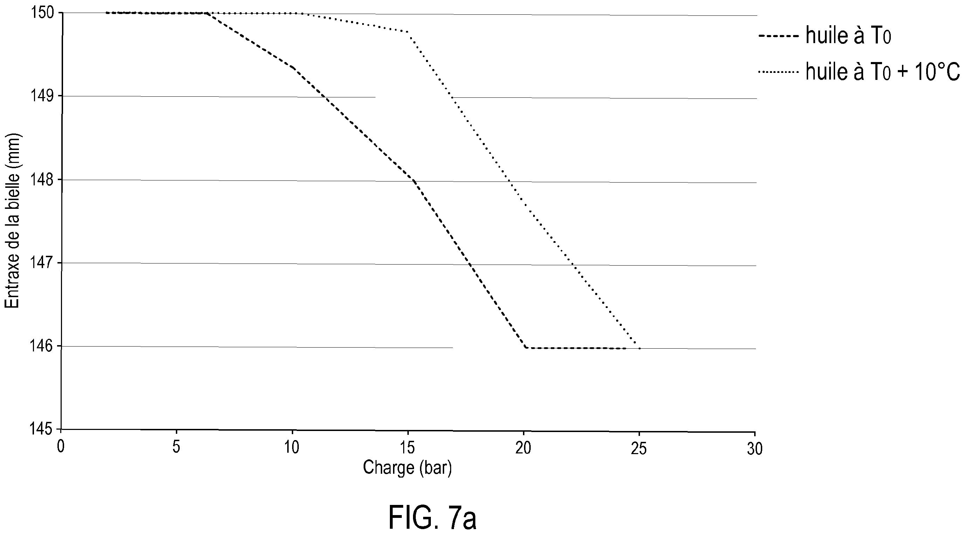

A titre d'exemple, la figure 7a est une représentation graphique de la relation liant la longueur d'une bielle pour laquelle la condition d'équivalence des sections n'est pas respectée (+10 % de surface au niveau de la chambre haute pression vis à vis de la chambre basse pression dans cet exemple) à la charge d'un moteur (à 2000 tours/min), dans un exemple particulier de mise en oeuvre de cette bielle. Cette figure représente cette relation dans le cas de fluides hydrauliques constitués par de l'huile, communément utilisée pour la lubrification des moteurs, dans un premier cas où l'huile a une température de référence, puis dans un second cas où la température de cette même huile a augmenté de 10°C, pour des conditions de fonctionnement identiques au premier cas. On observe qu'une faible élévation de température de 10°C conduit à une relation charge moteur-longueur de bielle très différente, et en conséquence une relation charge moteur-rapport volumétrique très différente qui ne peut être tolérée pour un fonctionnement reproductible et prévisible de ce moteur.

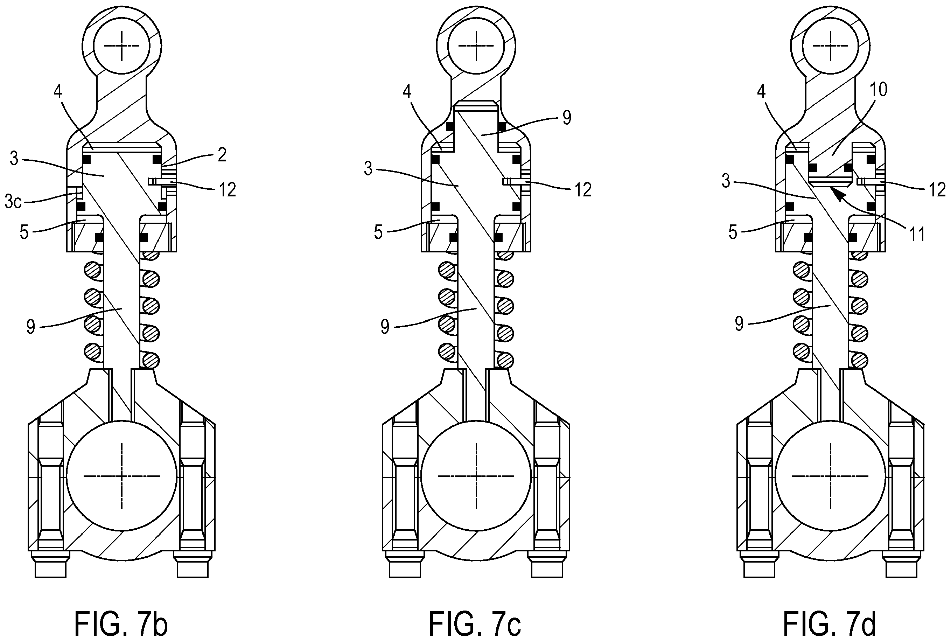

De nombreuses configurations des chambres hydrauliques 4, 5 permettent de réaliser la condition de section équivalente, et de limiter ainsi les effets de température, comme cela est représenté sur les figures 7b à 7d à titre d'illustration.

Selon un premier exemple, représenté sur la figure 7b, cette condition est obtenue par un piston 3 à double étage. Sur cette figure, le cylindre 2 présente un épaulement circulaire 3c de sorte que la chambre basse pression 5 présente un diamètre plus grand que celui de la chambre haute pression 4. Cette différence de diamètre est compensée par la section de la tige 9 du piston 3 dans la chambre basse pression 5, si bien qu'au final le volume engendré par le déplacement du piston 3 dans une chambre est identique au volume engendré dans l'autre chambre par le même déplacement du piston 3.

Selon un deuxième exemple, représenté sur la figure 7c, cette condition est obtenue par un piston 3 à tige débouchante externe. La tige 9 du piston 3 s'étend de part et d'autre du piston 3 et dans le volume de chacune des chambres 4, 5. De la sorte on assure également la condition de section équivalente.

Selon un troisième exemple, représenté sur la figure 7d, cette condition est obtenue par un piston 3 à tige débouchante interne. Sur cette figure, la chambre haute pression 4 présente un corps saillant 10 dont la section est identique à celle de la tige 9 du piston 3. Ce corps saillant 10 est ajusté à un alésage 11 formé dans le piston 3, de manière à pouvoir y coulisser. De la sorte on assure également la condition de section équivalente.

Afin de pouvoir ajuster avec plus de flexibilité la dynamique de l'écoulement, la bielle 1 peut comprendre :
- Au moins un conduit calibré 6a dit « de traction » autorisant uniquement un écoulement du fluide hydraulique de la chambre basse pression 5 vers la chambre haute pression 4;
- Au moins un conduit calibré 6b dit « de compression » autorisant uniquement un écoulement du fluide hydraulique de la chambre haute pression 4 vers la chambre basse pression 5.

Chacun des conduits 6a, 6b peuvent être muni d'un clapet pour autoriser l'écoulement dans une unique direction.

On peut ainsi ajuster chacun des conduits (par exemple dans leurs calibres) indépendamment l'un de l'autre et permettre une dynamique différenciée de l'ajustement de la longueur de bielle suivant qu'un effort de traction ou de compression s'applique.

Dans une variante préférée, le conduit calibré de compression 6b autorise un écoulement uniquement lorsque la pression de la chambre haute pression 4 excède la pression de la chambre basse pression 5 d'une valeur déterminée. Ceci peut être facilement réalisé en munissant le conduit 6b d'un clapet anti-retour taré à une différence de pression prédéterminée.

En bloquant ainsi l'écoulement en dessous d'un différentiel de pression déterminé, on empêche tout mouvement de compression du piston 3 dans le cylindre 2 de la bielle tant que cette pression n'est pas dépassée. On obtient ainsi un effet similaire à celui de la précharge des moyens de rappels 7, ces moyens pouvant présenter alors une dimension moindre pour un effet identique.

Dans une variante, la bielle peut présenter deux conduits calibrés de compression 6b, l'un étant simple et permettant un écoulement calibré dès qu'un effort de compression est appliqué à la bielle 1, l'autre étant muni d'un clapet anti-retour taré pour permettre un écoulement complémentaire dès qu'un effort suffisant (induisant un différentiel de pression suffisant entre les deux chambres) de compression est appliqué à la bielle 1.

On dispose ainsi de moyens additionnels pour ajuster la dynamique de l'écoulement et donc la vitesse d'ajustement de la longueur de la bielle aux efforts instantanés qui s'y appliquent ; et plus généralement pour contrôler la relation liant le rapport volumétrique à la charge du moteur.

Les clapets sont généralement constitués d'une partie mobile (telle qu'une bille) pouvant se déplacer selon une direction de mobilité, et coopérant avec un siège et/ou un ressort. Ce mécanisme bien connu permet de sélectivement ouvrir ou fermer un passage d'écoulement suivant le différentiel de pression existant entre l'amont et l'aval de ce passage.

Avantageusement, les clapets qui sont associés aux conduits 6 ; 6a, 6b et/ou aux moyens de remplissage 8 et/ou aux moyens de décharge 9 de la bielle 1 selon l'invention sont agencés de manière à placer les directions de mobilité de leurs parties mobiles parallèles aux axes de pied et de tête de la bielle 1. Dans cette configuration, les parties mobiles ne sont pas soumises dans leurs directions de mobilité à l'accélération de la bielle 1 lors de son fonctionnement dans un moteur. On évite de la sorte à rendre dépendant du régime moteur le comportement en ouverture ou en fermeture de ces clapets.

Alternativement, on peut choisir de placer la direction de mobilité des parties mobiles des clapets (ou de certains d'entre eux) dans un plan comprenant l'axe principal de la bielle 1, c'est à dire dans sa longueur, et l'axe transversal à la bielle 1, c'est à dire dans sa largeur. Dans ce cas, ces parties mobiles subissent des forces au cours du fonctionnement du moteur, proportionnelles à leurs orientations dans ce plan, à leurs accélérations et à leurs masses, qui contribuent à l'ouverture ou à la fermeture des clapets auxquelles elles sont associées. Ces forces peuvent notamment se développer à proximité des positions de point mort haut et de point mort bas du piston de combustion (l'accélération de la bielle à proximité de ces positions étant liée au régime moteur). Plus précisément, lorsque l'un de ces clapets est placé selon l'axe de la bielle 1, l'accélération maximale liée à la vitesse de rotation du moteur susceptible d'agir sur l'ouverture ou la fermeture du clapet, se trouve proche du pic d'effort de combustion. Et lorsque l'un de ces clapets est placé transversalement à l'axe de la bielle 1, l'accélération maximale liée à la vitesse de rotation du moteur susceptible d'agir sur l'ouverture ou la fermeture du clapet, se trouve éloignée du pic d'effort lié à la combustion. Il peut alors être judicieux et utile de choisir le placement suivant un axe ou l'autre, et plus généralement dans le plan défini par ces axes, et les masses respectives des parties mobiles des clapets (et la raideur des éventuels ressorts avec lesquels elles coopèrent) dans le but d'ajuster plus finement le comportement (loi longueur de bielle - charge) du dispositif, notamment suivant le régime moteur. Il devient alors possible d'ouvrir ou fermer ces clapets, et notamment les clapets pouvant être associés au(x) conduit(s) calibré(s) 6, au-delà d'un régime moteur déterminé, ce qui offre une dimension additionnelle d'optimisation du comportement de la bielle.

Selon un autre aspect avantageux, les clapets disposent d'un arrêt mécanique de la partie mobile limitant leur ouverture maximum et permettent de contrôler le débit de l'écoulement, et éviter la sollicitation excessive du ressort de clapet, lorsqu'un tel ressort est présent.

Dans certains cas, on peut également munir les conduits 6 ; 6a, 6b de clapets « fuyards », pour lesquels un conduit de contournement est placé en parallèle au clapet lui-même. Comme cela est bien connu en soi, les clapets « fuyards » permettent de dissocier les flux montant et descendant, et d'ajuster les écoulements.

La détermination de la configuration et de la calibration des conduits d'écoulement 6a, 6b entre la chambre haute pression et la chambre basse pression est bien entendu liée à la configuration du moteur dans laquelle la bielle est appelée à fonctionner, et à la performance choisie ou attendue de ce moteur.

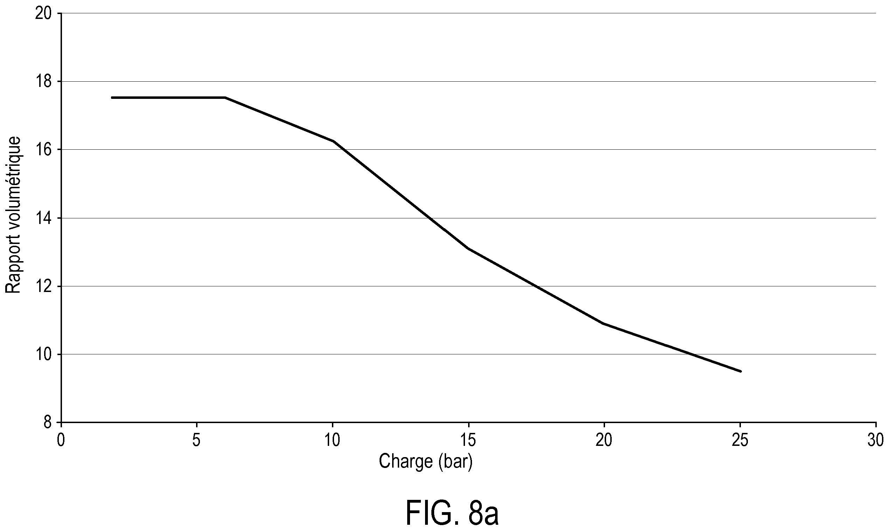

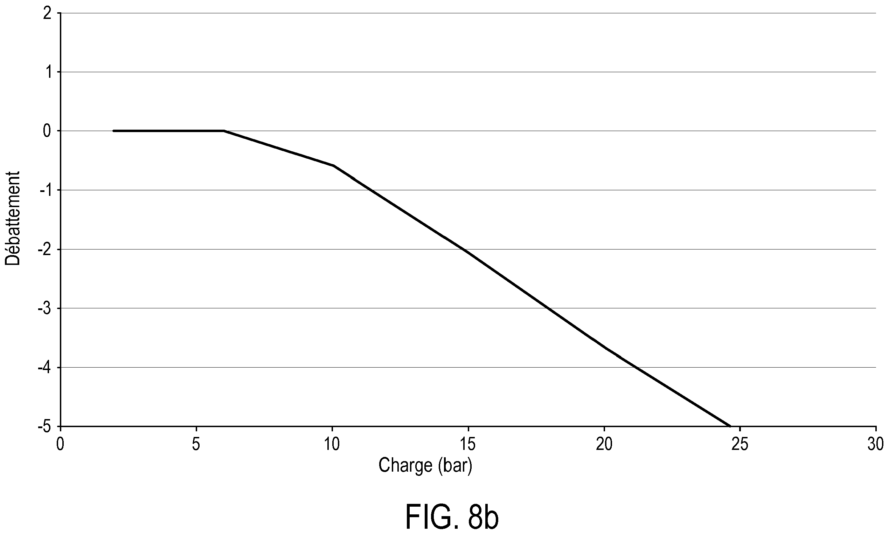

D'une manière générale, on vise à rendre le fonctionnement de la bielle (l'ajustement de la longueur de la bielle à la charge du moteur, c'est à dire aux efforts moyens de traction et de compression) conforme à une relation prédéterminée suivant les des caractéristiques recherchées du moteur, par exemple à donner l'allure de la courbe représentée sur les figures 8a et 8b. Ceci peut comporter un arbitrage entre la complexité de la configuration retenue d'écoulement (nombre de conduits, etc) et sa performance. D'une manière générale, les caractéristiques des moyens mécaniques de rappel 7 et du (ou des) conduit calibré sont choisies pour que l'ajustement de la longueur de la bielle 1 aux efforts moyens de traction et de compression se conforme à une relation prédéterminée.

L'homme du métier pourra se faire aider de nombreux moyens usuels pour réaliser cette phase de conception et/ou de validation. Il peut s'agir en particulier de moyens de simulation et d'optimisation numériques, ou de bancs de test permettant de solliciter la bielle en traction et en compression suivant des profils d'efforts choisis afin de qualifier son comportement statique et dynamique. On pourra notamment utiliser ces moyens pour s'assurer que les caractéristiques des moyens mécaniques de rappel et du ou des conduit(s) conduisent bien à conférer à la bielle le comportement dynamique d'un système oscillant fortement amorti.

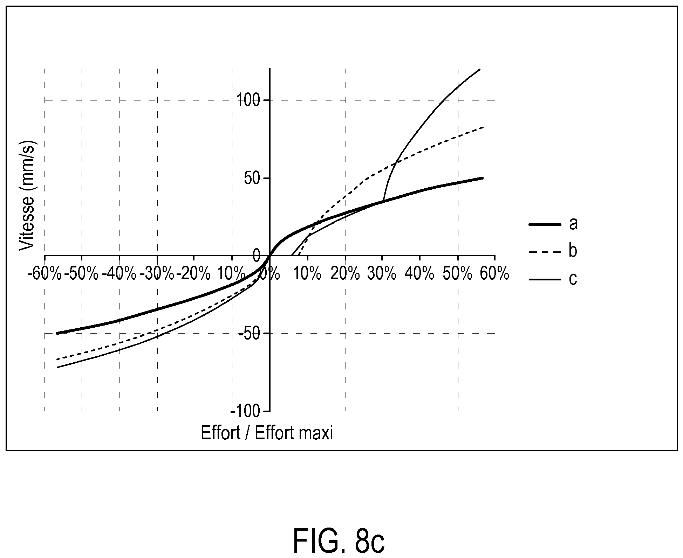

A titre d'exemple, la personne du métier pourra chercher à reproduire un amortissement dont la loi est donnée en figure 8c. Cette figure représente (en ordonné), la vitesse d'élongation de la bielle, selon (en abscisse) l'amplitude d'un effort constant qui lui est appliqué. Cette amplitude est normalisée par l'effort maximum appliqué sur la bielle correspondant au pic de combustion. Sur la figure 8c, trois lois sont représentées à titre d'illustration, pour trois configurations de bielles différentes et conformes à l'invention :
(a) bielle présentant un unique conduit calibré;
(b) bielle présentant deux conduits calibrés, respectivement de traction et de compression, le conduit de compression étant muni d'un clapet anti-retour taré;
(c) bielle présentant trois conduits calibrés, un conduit de traction et deux conduits de compression, chacun des conduits de compression étant muni d'un clapet anti-retour taré.

Ces lois d'amortissement sont caractérisées, entre autres, par une vitesse de déplacement comprise entre 30 et 200mm/s lorsque l'effort appliqué vaut 50% de l'effort maximal visible sur la bielle.

Une vitesse de l'ordre de 30mm/s permet d'assurer un système avec peu d'oscillations de la longueur de la bielle autour de sa position d'équilibre au cours d'un cycle moteur, mais a pour conséquence de ralentir la variation du rapport volumétrique lorsque la charge du moteur varie. Une vitesse de l'ordre de 200mm/s permet, à l'inverse, d'avoir une variation rapide du rapport volumétrique lorsque la charge varie, mais peut entraîner l'apparition d'oscillations de la longueur de bielle autour de sa position d'équilibre. La présence d'un ou d'une pluralité de clapets anti-retour taré permet d'établir une loi de comportement réalisant un meilleur compromis entre les oscillations de la longueur de bielle, et la réactivité de changement du rapport volumétrique.

De manière optionnelle, la bielle 1 pourra comporter une cible (par exemple, un corps magnétique) permettant de détecter son passage devant un détecteur placé en vis à vis dans le moteur ou intégré au carter moteur (par exemple un capteur à effet Hall). On constitue ainsi un système de détermination de la longueur de la bielle 1 lors de son fonctionnement. On pourra alternativement préférer la solution connue du document DE102009013323.

D'une manière générale, la bielle 1 et/ou le moteur dans lequel la bielle sera amenée à fonctionner sera avantageusement muni d'un dispositif de détermination du rapport volumétrique, cette information pouvant être utile pour la commande des organes du moteur. A cet effet, le moteur ou le dispositif dans lequel la bielle 1 est amenée à fonctionner pourra avantageusement être équipé des capteurs nécessaires, d'un calculateur et des programmes associés permettant cette détermination, et sa prise en compte pour la commande des autres organes du moteur. Il pourra s'agir par exemple de la solution connue du document précité ou de la cible et du détecteur constituant le système de détermination de la longueur de la bielle 1.

### DESCRIPTION DETAILLEE D'EXEMPLES NON LIMITATIFS DE REALISATION

À titre d'exemple, on présente dans les paragraphes qui suivent différentes solutions de bielles conformes à l'invention et tout particulièrement adaptées à un fonctionnement dans un moteur à combustion présentant les caractéristiques suivantes :
- Diamètre du piston de combustion : 75 mm ;
- Course 84 mm ;
- Tricylindre formant 1113 cm^3 de cylindrée ;
- Charge maximale : 25 bar de PME (pression moyenne effective) pour une pression de combustion maximum de 130b;

La figure 8a représente une loi de comportement charge moteur - rapport volumétrique cible de ce moteur. Comme cela est visible sur la figure 8b, cette loi se traduit par un débattement maximum de la bielle de 4 mm entre le rapport volumétrique maximum et le rapport volumétrique minimum.

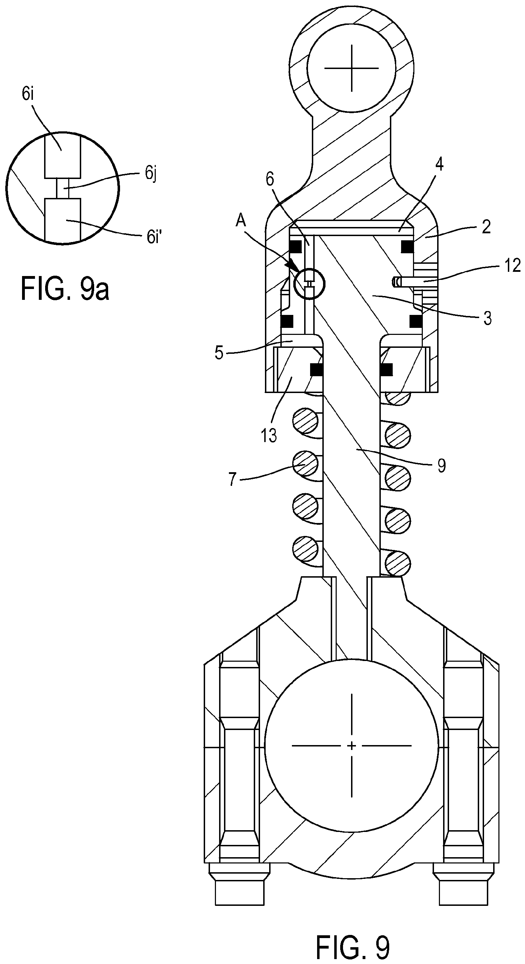

La figure 9 représente un premier exemple de bielle 1 conforme à l'invention et cherchant à reproduire la loi de comportement des figures 8a et 8b.

Dans la bielle 1 de la figure 9, le cylindre 2 de section circulaire est solidaire du pied de bielle, et le piston 3 est associé par l'intermédiaire de sa tige 9 à la tête de bielle. L'entraxe de la bielle 1 est de 150 mm, lorsque celle-ci est dans sa position nominale et de l'ordre de 146 mm lorsqu'elle est dans sa position compressée, en butée.

L'ouverture du cylindre 2 est refermée par un capot 13, qui peut être vissé sur le cylindre 2, pour définir dans le cylindre 2 avec le piston 3 la chambre basse pression 5. Le fond du cylindre 2, définit quant à lui avec le piston 3 la chambre basse pression 5. Les dimensions respectives du cylindre 2 et du piston 3, permettent un débattement de 4 mm de la bielle entre ses butées mécaniques formées par le fond du cylindre 2 et le capot 13. Cette configuration de bielle 1 permet d'atteindre respectivement un rapport volumétrique minimum de 10,3 et maximum de 17,6 lorsqu'elle est placée dans le moteur décrit précédemment.

Similairement à ce qui avait été décrit en relation avec la figure 7b, la bielle présente un piston à double étage, formé par l'épaulement 3c. La chambre haute pression 4 présente un diamètre de 26,5 mm, ce qui représente une surface « utile » (c'est à dire la surface projetée sur le plan perpendiculaire à l'axe de déplacement du piston) du fluide sur le piston 3 de 552 mm^2. La chambre hydraulique de basse pression 5 présente un diamètre interne de 30 mm, et la tige 9 présente une section circulaire dont le diamètre est de 14 mm. En conséquence, la surface utile du fluide de cette chambre sur le piston 3 est de 553 mm^2, donc quasi identique à celle de la chambre hydraulique de haute pression 4. La condition de section équivalente est bien respectée.

Dans le piston 3, un moyen d'indexation sous la forme d'une goupille 12 est placé au travers d'une ouverture oblongue du cylindre 2 (dont la longueur s'étend dans la direction longitudinale de la bielle 1) afin d'éviter la rotation du piston 3 tout en permettant son coulissement.

Un ressort est placé entre le pied et la tête de bielle, de manière à appliquer un effort de rappel à la bielle 1. Dans cet exemple particulier, le ressort présente une raideur de 454 N/mm ; et applique un effort de pré charge de 1266 N.

La bielle 1 représentée sur la figure 9 est particulièrement simple, et présente un unique conduit 6 calibré de diamètre interne de 0,44 mm pour assurer le transfert du fluide hydraulique d'une chambre à l'autre sous l'effet des efforts de traction et de compression exercés sur la bielle 1. Dans l'exemple reproduit sur cette figure, et comme cela est reproduit plus en détail sur la figure 9a, le conduit 6 est constitué de deux segments extrêmes 6i et 6i' dont la section présente un diamètre de l'ordre de 4 mm et d'un segment central 6j de longueur 1 mm et de section 0,44 mm. Cette configuration forme un conduit calibré avec précision, et dont on peut déterminer que la loi d'écoulement est de type « turbulent » dans les conditions de fonctionnement du moteur.

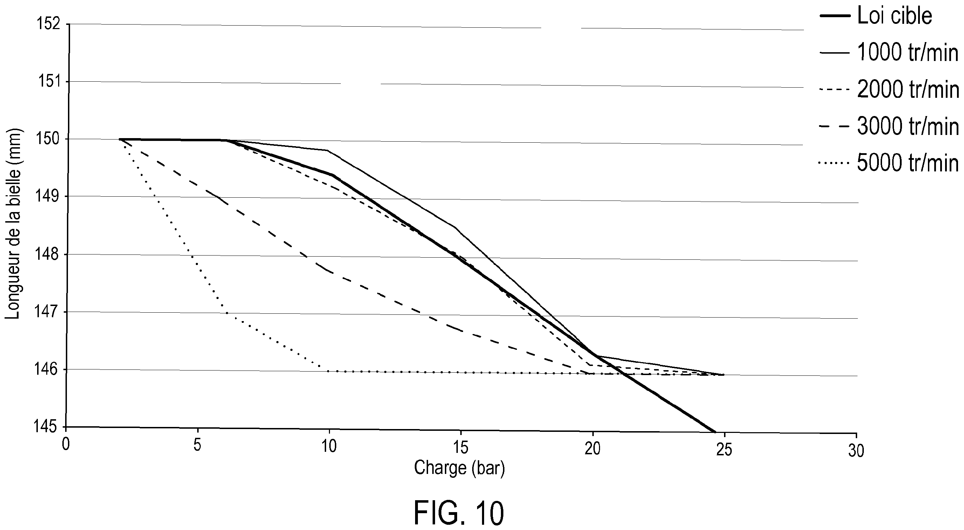

La figure 10 représente le comportement de la bielle lorsque celle-ci est mise en opération dans le moteur dont les caractéristiques ont été précisées précédemment. On observe qu'à faible régime moteur, il est possible de suivre avec une bonne précision la loi de comportement attendu. A régime moteur plus élevé, et bien que le comportement général soit tout à fait acceptable et fonctionnel, celui-ci s'écarte toutefois du comportement cible souhaité. Dans tous les cas, on déduit de la courbe représentée sur la figure 10, que la longueur de la bielle 1 est bien ajustée suivant les efforts moyens qui s'y appliquent. Par ailleurs, les chambres hydrauliques 4, 5 et le piston 3 de cet exemple étant configurés pour présenter des sections équivalentes, le comportement (loi longueur de bielle - charge) est essentiellement indépendant de la température du fluide hydraulique.

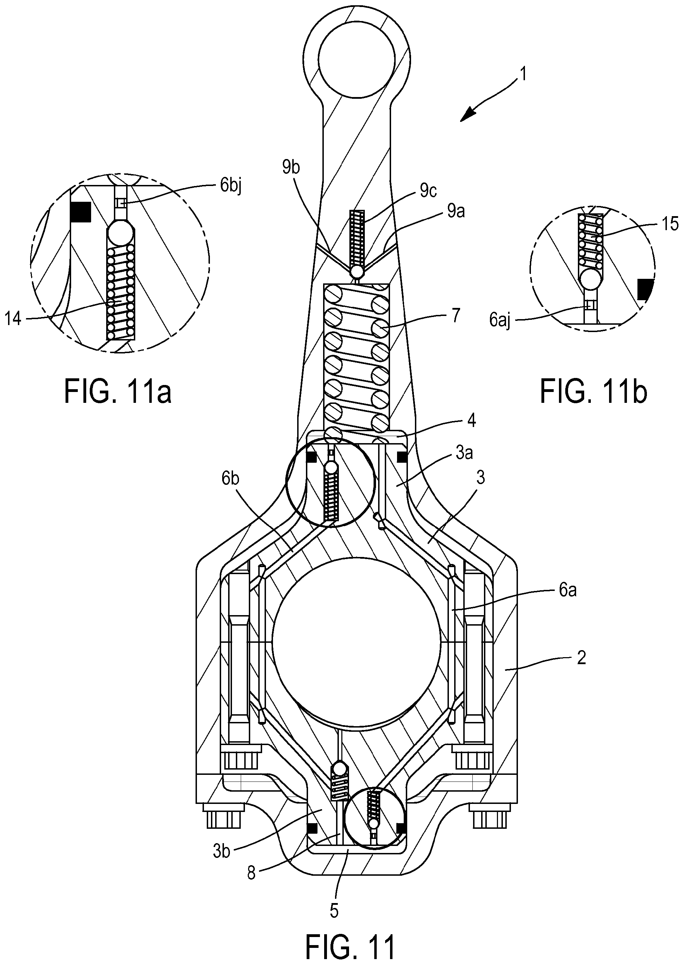

La figure 11 représente un second exemple de bielle 1 conforme à l'invention et cherchant à reproduire la loi de comportement des figures 8a et 8b. Les valeurs d'entraxe de ce second exemple sont identiques à celles du premier exemple qui vient d'être exposé.

Dans ce second exemple, les chambres hydrauliques basse et haute pression 5,4 sont positionnées de part et d'autre de la tête de la bielle. Le cylindre 2 s'étend en partie dans le pied de bielle, et en partie dans le chapeau de bielle, chacune de ces parties présentant une section circulaire de 23,5 mm de diamètre. Le piston 3 quant à lui est constitué de deux parties 3a et 3b, de même section, coopérant respectivement avec le cylindre du côté du pied de bielle et du côté du chapeau. Cette configuration respecte naturellement la condition de section équivalente.

Le ressort 7 est dans ce second exemple placé à l'intérieur de la bielle 1, ce qui présente un avantage d'encombrement particulièrement notable, au sein d'un alésage formé dans le fond de chambre hydraulique haute pression 4. Le ressort prend appui sur le fond de cet alésage et, de l'autre coté, sur la surface exposée du piston 3a, pour exercer sa force de rappel. Il présente une raideur de 427 N/mm et exerce un effort de pré charge de 904 N.

Le pied de bielle présente deux conduits 9a, 9b et un limiteur de pression 9c formant des moyens de décharge 9 de la pression excessive qui pourrait se former dans la chambre haute pression 4. Le piston 3 est également muni d'un moyen de remplissage 8 de la chambre hydraulique basse pression 5 en fluide hydraulique.

Le piston 3 est également muni d'un premier conduit de compression 6b présentant, comme cela est présenté plus en détail sur la figure 11a, un diamètre de 0,43 mm au niveau d'une section centrale 6bj, cette section présentant une longueur de 1 mm, et un clapet taré 14 à une pression d'ouverture 102,9 bar. Comme cela a été présenté précédemment, la présence de ce clapet taré 14 permet de limiter la taille et la raideur du ressort 7, de bien plus faible dimension que dans l'exemple précédent, et de le placer à l'intérieur du pied de bielle.

Le piston présente également un second conduit de traction 6a, représenté plus en détail sur la figure 11b, dont le diamètre de l'orifice au niveau d'une section centrale 6aj est de 0,4 mm ; et d'un clapet taré 15 dont la pression d'ouverture est choisie à 0,7 bar.

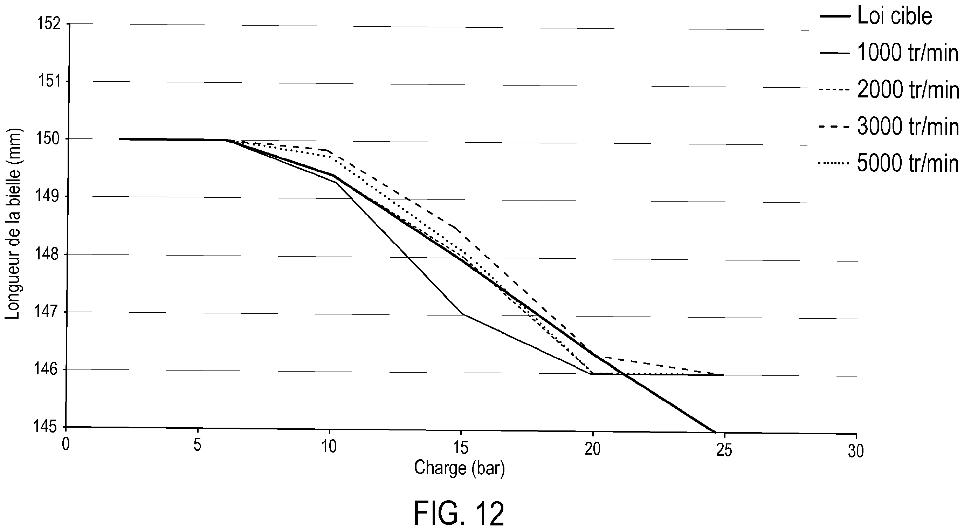

La figure 12 représente le comportement de la bielle du second exemple lorsque celle-ci est mise en opération dans le moteur dont les caractéristiques ont été précisées précédemment. On observe que, quelque soit le régime moteur, il est possible de suivre avec une bonne précision la loi de comportement attendu. Par ailleurs, les chambres hydrauliques 4, 5 et le piston 3 étant configurés pour présenter des sections équivalentes et la configuration des conduits 6a, 6b permettant un écoulement de type « turbulent » du fluide hydraulique dans les conditions de fonctionnement du moteur, le comportement est essentiellement indépendant de la température du fluide hydraulique.

## Revendications

1. Bielle de longueur variable (1) pour ajuster le rapport volumétrique d'un moteur, la bielle (1) présentant une longueur nominale et étant susceptible d'être soumise à des efforts de traction et de compression suivant son axe longitudinal, la bielle comprenant :
- un cylindre (2) solidaire d'une première extrémité (E1) de la bielle (1) ;
- un piston (3) mobile dans le cylindre (2), solidaire de la seconde extrémité (E2) de la bielle, et définissant dans le cylindre une première chambre hydraulique (4) dite « haute pression » apte à transmettre les efforts de compression et une seconde chambre hydraulique (5) dite « basse pression » apte à transmettre les efforts de traction;
- au moins un conduit calibré (6 ; 6a, 6b) permettant l'écoulement d'un fluide hydraulique entre la chambre basse pression (5) et la chambre haute pression (4) ;
- des moyens mécaniques de rappel (7) tendant à ramener la bielle à sa longueur nominale ;
et **caractérisée en ce que** la chambre hydraulique basse pression (5) et la chambre hydraulique haute pression (4) présentent des sections équivalentes.

2. Bielle de longueur variable (1) selon la revendication précédente dans laquelle le cylindre (2) présente une section circulaire, et le cylindre (2) et/ou le piston (3) est pourvu d'un moyen d'indexation (12) en rotation du piston (3) par rapport au cylindre (2).

3. Bielle de longueur variable (1) selon l'une des revendications 1 et 2 dans laquelle le cylindre (2) présente une section ovale.

4. Bielle de longueur variable (1) selon l'une des revendications précédentes dans laquelle les moyens mécaniques de rappel (7) comprennent un ressort.

5. Bielle de longueur variable (1) selon la revendication précédente dans laquelle le ressort est placé dans la chambre hydraulique haute pression (4).

6. Bielle de longueur variable (1) selon l'une des deux revendications précédentes dans laquelle le ressort est préchargé.

7. Bielle de longueur variable (1) selon l'une des revendications précédentes comportant de plus des moyens de remplissage (8) du cylindre (2) d'un fluide hydraulique.

8. Bielle de longueur variable (1) selon la revendication précédente dans laquelle les moyens de remplissage (8) sont agencés pour introduire le fluide hydraulique dans la chambre basse pression (5).

9. Bielle de longueur variable (1) selon l'une des revendications précédentes comportant de plus de moyens de décharge (9) d'un excès de fluide hydraulique dans le cylindre (2) afin de limiter la pression qui s'y développe.

10. Bielle de longueur variable (1) selon l'une des revendications précédentes dans laquelle le conduit calibré (6 ; 6a, 6b) est formé dans le piston (3).

11. Bielle de longueur variable (1) selon l'une des revendications 1 à 10 dans laquelle le conduit calibré (6 ; 6a, 6b) est formé dans le cylindre (2).

12. Bielle de longueur variable (1) selon l'une des revendications 1 à 10 dans laquelle le conduit calibré (6) est formé par le choix du jeu entre le piston (3) et le cylindre (2).

13. Bielle de longueur variable (1) selon l'une des revendications précédentes comprenant :
- Au moins un conduit calibré (6a) dit « de traction » autorisant uniquement un écoulement de la chambre hydraulique basse pression (5) vers la chambre hydraulique haute pression (4);
- Au moins un conduit calibré (6b) dit « de compression » autorisant uniquement un écoulement de la chambre hydraulique haute pression (4) vers la chambre hydraulique basse pression (5).

14. Bielle de longueur variable (1) selon la revendication précédente dans lequel le conduit calibré de compression (6b) autorise un écoulement uniquement lorsque la pression dans la chambre hydraulique haute pression (4) excède la pression dans la chambre hydraulique basse pression (5) d'une valeur déterminée.

15. Bielle de longueur variable (1) selon l'une des deux revendications précédentes présentant au moins deux conduits calibrés de compression (6b).

16. Bielle de longueur variable (1) selon l'une des revendications précédentes dans laquelle le ou les conduit(s) calibré(s) (6 ; 6a, 6b) est ou sont configuré(s) pour favoriser un écoulement turbulent du fluide hydraulique.

17. Bielle de longueur variable (1) selon l'une des revendications précédentes comportant au moins un clapet formé d'une partie mobile dont la direction de mobilité est parallèle aux axes de pied et de tête de la bielle (1).

18. Bielle de longueur variable (1) selon l'une des revendications précédentes comportant au moins un clapet formé d'une partie mobile dont la direction de mobilité est située dans un plan comprenant l'axe principal et transversal de la bielle (1), la masse de la partie mobile du clapet étant choisie à une grandeur déterminée.

19. Bielle de longueur variable (1) selon l'une des revendications précédentes pour laquelle les caractéristiques des moyens mécaniques de rappel (7) et du conduit calibré (6 ; 6a, 6b) sont choisies pour que la bielle (1) forme un système oscillant fortement amorti.

20. Moteur à rapport volumétrique variable **caractérisé en ce qu'**il comprend une bielle (1) selon l'une des revendications précédentes.

21. Moteur à rapport volumétrique variable selon la revendication précédente, comprenant un dispositif de détermination du rapport volumétrique.

22. Moteur à rapport volumétrique variable selon la revendication précédente, dans lequel le dispositif de détermination du rapport volumétrique comprend une cible disposée sur la bielle de longueur variable (1) et un détecteur placé en vis-à-vis dans le moteur.

## Patentansprüche

1. Pleuel mit veränderlicher Länge (1) zum Einstellen des Verdichtungsverhältnisses eines Motors, wobei das Pleuel eine Nennlänge aufweist und Zug- und Druckbeanspruchungen an seiner Längsachse ausgesetzt sein kann, wobei das Pleuel folgendes umfasst:
- einen Zylinder (2), der fest mit einem ersten Ende (E1) des Pleuels (1) verbunden ist;
- einen im Zylinder (2) beweglichen Kolben (3), der fest mit dem zweiten Ende (E2) des Pleuels verbunden ist und im Zylinder eine erste hydraulische Kammer (4), genannt "Hochdruckkammer" abgrenzt, die in der Lage ist, die Druckbeanspruchungen zu übertragen, und eine zweite hydraulische Kammer (5), genannt "Niederdruckkammer", die in der Lage ist, die Zugbeanspruchungen zu übertragen;
- zumindest eine kalibrierte Leitung (6; 6a, 6b), die das Strömen einer Hydraulikflüssigkeit zwischen der Niederdruckkammer (5) und der Hochdruckkammer (4) ermöglicht;
- mechanische Rückholmittel (7), die darauf hinwirken, das Pleuel wieder auf seine Nennlänge zu bringen,
**dadurch gekennzeichnet, dass** die hydraulische Niederdruckkammer (5) und die hydraulische Hochdruckkammer (4) äquivalente Querschnitte haben.

2. Pleuel mit veränderlicher Länge (1) nach dem vorhergehenden Anspruch, bei dem der Zylinder (2) einen runden Querschnitt aufweist, und der Zylinder (2) und/oder der Kolben (3) mit einem Indexierungsmittel (12) versehen ist bzw. sind, das sich in Bezug auf den Zylinder (2) um den Kolben (3) dreht.

3. Pleuel mit veränderlicher Länge (1) nach einem der Ansprüche 1 und 2, bei dem der Zylinder (2) einen ovalen Querschnitt aufweist.

4. Pleuel mit veränderlicher Länge (1) nach einem der vorhergehenden Ansprüche, bei dem die mechanischen Rückholmittel (7) eine Feder umfassen.

5. Pleuel mit veränderlicher Länge (1) nach dem vorhergehenden Anspruch, bei dem die Feder in der hydraulischen Hochdruckkammer (4) platziert ist.

6. Pleuel mit veränderlicher Länge (1) nach einem der zwei vorhergehenden Ansprüche, in dem die Feder belastet ist.

7. Pleuel mit veränderlicher Länge (1) nach einem der vorhergehenden Ansprüche, das außerdem Mittel zum Befüllen (8) des Zylinders (2) mit einer Hydraulikflüssigkeit umfasst.

8. Pleuel mit veränderlicher Länge (1) nach dem vorhergehenden Anspruch, bei dem die Füllmittel (8) so angeordnet sind, dass die Hydraulikflüssigkeit in die Niederdruckkammer (5) fließt.

9. Pleuel mit veränderlicher Länge (1) nach einem der vorhergehenden Ansprüche, das Mittel zum Ablassen (9) der überschüssigen Hydraulikflüssigkeit im Zylinder (2) umfasst, um den sich darin entwickelnden Druck zu begrenzen.

10. Pleuel mit veränderlicher Länge (1) nach einem der vorhergehenden Ansprüche, in dem die kalibrierte Leitung (6; 6a, 6b) im Kolben (3) gebildet wird.

11. Pleuel mit veränderlicher Länge (1) nach einem der Ansprüche 1 bis 10, in dem die kalibrierte Leitung (6; 6a, 6b) im Zylinder (2) gebildet wird.

12. Pleuel mit veränderlicher Länge (1) nach einem der Ansprüche 1 bis 10, in dem die kalibrierte Leitung (6) durch die Wahl des Spiels zwischen dem Kolben (3) und dem Zylinder (2) gebildet wird.

13. Pleuel mit veränderlicher Länge (1) nach einem der vorhergehenden Ansprüche, das Folgendes umfasst:
- mindestens eine kalibrierte Leitung (6a), genannt "Zugleitung", die ausschließlich das Strömen der Flüssigkeit von der hydraulischen Niederdruckkammer (5) zur hydraulischen Hochdruckkammer (4) zulässt;
- mindestens eine kalibrierte Leitung (6b), genannt "Druckleitung", die ausschließlich das Strömen der Flüssigkeit von der hydraulischen Niederdruckkammer (4) zur hydraulischen Hochdruckkammer (5) zulässt.

14. Pleuel mit veränderlicher Länge (1) nach dem vorhergehenden Anspruch, bei dem die kalibrierte Druckleitung (6b) das Strömen der Flüssigkeit nur dann zulässt, wenn der Druck in der hydraulischen Hochdruckkammer (4) größer ist als ein bestimmter Druckwert in der hydraulischen Niederdruckkammer (5).

15. Pleuel mit veränderlicher Länge (1) nach einem der beiden vorhergehenden Ansprüche, das zumindest zwei kalibrierte Druckleitungen (6b) aufweist.

16. Pleuel mit veränderlicher Länge (1) nach einem der vorhergehenden Ansprüche, bei dem die kalibrierte(n) Leitungen(en) (6; 6a, 6b) so gestaltet ist (sind), dass ein wirbelartiges Strömen der Hydraulikflüssigkeit begünstigt wird.

17. Pleuel mit veränderlicher Länge (1) nach einem der vorhergehenden Ansprüche, das zumindest ein Ventil umfasst, das aus einem beweglichen Teil gebildet wird, dessen Bewegungsrichtung parallel zur Fuß- und zur Kopfachse des Pleuels (1) verläuft.

18. Pleuel mit veränderlicher Länge (1) nach einem der vorhergehenden Ansprüche, das zumindest ein Ventil umfasst, das aus einem beweglichen Teil gebildet wird, dessen Bewegungsrichtung sich auf einer Ebene befindet, die die Haupt- und Querachse des Pleuels (1) umfasst, wobei das Gewicht des beweglichen Ventilteils in einer bestimmten Größe ausgewählt wird.

19. Pleuel mit veränderlicher Länge (1) nach einem der vorhergehenden Ansprüche, bei dem die Merkmale der mechanischen Rückholmittel (7) und der kalibrierten Leitung (6; 6a, 6b) so ausgewählt sind, dass das Pleuel (1) ein stark gedämpftes schwingendes System bildet.

20. Motor mit veränderlichem Verdichtungsverhältnis, **dadurch gekennzeichnet, dass** er ein Pleuel (1) nach einem der vorhergehenden Ansprüche umfasst.

21. Motor mit veränderlichem Verdichtungsverhältnis nach dem vorhergehenden Anspruch, welcher eine Vorrichtung zur Bestimmung des Verdichtungsverhältnisses umfasst.

22. Motor mit veränderlichem Verdichtungsverhältnis nach dem vorhergehenden Anspruch, bei dem die Vorrichtung zur Bestimmung des Verdichtungsverhältnisses ein Ziel umfasst, das auf dem Pleuel mit veränderlicher Länge (1) angeordnet ist, und einen Detektor, der im Motor gegenüber positioniert ist.

## Claims

1. A rod (1), the length of which is variable, for adjusting the compression ratio of an engine, said rod (1) having a nominal length and being likely to be subjected to tensile and compression forces along its longitudinal axis, the rod comprising:
- a cylinder (2) rigidly connected to a first end (El) of the rod (1);
- a piston (3) movable in the cylinder (2), rigidly connected to the second end (E2) of the rod, and defining in the cylinder a first so-called "high pressure" hydraulic chamber (4) capable of transmitting the compression forces and a second so-called "low pressure" hydraulic chamber (5) capable of transmitting the tensile forces;
- at least one pipe (6; 6a, 6b) calibrated to enable the hydraulic fluid to flow between the low pressure chamber (5) and the high pressure chamber (4);
- mechanical return means (7) tending to bring the rod back to its nominal length;
and **characterized in that** the low pressure hydraulic chamber (5) and the high pressure hydraulic chamber (4) have equal cross-sections.

2. A rod with a variable length (1) according to the preceding claim, wherein the cylinder has a circular cross-section, and the cylinder (2) and/or the piston (3) is provided with a means for indexing (12) the rotation of the piston (3) relative to the cylinder (2) .

3. A rod with a variable length (1) according to one of claims 1 and 2, wherein the cylinder (2) has an oval cross-section.

4. A rod with a variable length (1) according to one of the preceding claims, wherein the mechanical return means (7) comprises a spring.

5. A rod with a variable length (1) according to the preceding claim, wherein the spring is placed in the high pressure hydraulic chamber (4).

6. A rod with a variable length (1) according to one of the preceding two claims, wherein the spring is preloaded.

7. A rod with a variable length (1) according to one of the preceding claims further comprising means (8) for filling the cylinder (2) with a hydraulic fluid.

8. A rod with a variable length (1) according to the preceding claim, wherein the filling means (8) are so arranged as to introduce the hydraulic fluid into the low pressure chamber (5).

9. A rod with a variable length (1) according to one of the preceding claims, further comprising means (9) for discharging hydraulic fluid in excess in the cylinder (2) in order to limit the pressure which develops therein.

10. A rod with a variable length (1) according to one of the preceding claims, wherein the calibrated pipe (6; 6a, 6b) is formed in the piston (3).

11. A rod with a variable length (1) according to one of claims 1 to 10, wherein the calibrated pipe (6; 6a, 6b) is formed in the cylinder (2).

12. A rod with a variable length (1) according to one of claims 1 to 10, wherein the calibrated pipe (6) is formed as a result of the choice of the clearance between the piston (3) and the cylinder (2).

13. A rod with a length (1) according to one of the preceding claims, comprising:
- at least one so-called "tensile" calibrated pipe (6a) allowing only a flow from the low pressure hydraulic chamber (5) to the high pressure hydraulic chamber (4);
- at least one so-called "compression" calibrated pipe (6b) allowing only a flow from the high pressure hydraulic chamber (4) to the low pressure hydraulic chamber (5).

14. A rod with a variable length (1) according to the preceding claim, wherein the compression calibrated pipe (6b) allows a flow only when the pressure in the high pressure hydraulic chamber (4) exceeds the pressure in the low pressure hydraulic chamber (5) by a determined value.

15. A rod with a variable length (1) according to one of the preceding two claims, having at least two compression calibrated pipes (6b).

16. A rod with a variable length (1) according to one of the preceding claims, wherein the calibrated pipe(s) (6; 6a, 6b) is/are configured for promoting a turbulent flow of the hydraulic fluid.

17. A rod with a variable length (1) according to one of the preceding claims, comprising at least one valve formed by a movable part, the moving direction of which is parallel to the axes of the rod (1) small and big ends.

18. A rod with a variable length (1) according to one of the preceding claims, comprising at least one valve formed by a movable part, the moving direction of which is located in a plane including the main and transverse axis of the rod (1), the mass of the movable part of the valve being chosen so as to be of a determined amount.

19. A rod with a variable length (1) according to one of the preceding claims, for which the characteristics of the mechanical return means (7) and the calibrated pipe (6; 6a, 6b) are chosen so that the rod (1) forms a significantly damped oscillatory system.

20. A variable compression ratio engine, **characterized in that** it comprises a rod (1) according to one of the preceding claims.

21. A variable compression ratio engine according to the preceding claim, comprising a compression ratio determining device.

22. A variable compression ratio engine according to the preceding claim, wherein the compression ratio determining device comprises a target positioned on the rod with a variable length (1) and a detector positioned opposite same, in the engine.
